# FASCICULE DE BREVET EUROPEEN

(11) **EP 2 835 697 B1**
(45) Date de publication et mention de la délivrance du brevet: **05.01.2022**
(21) Numéro de dépôt: 13179298.8
(22) Date de dépôt: 05.08.2013
(51) Int. Cl.: G04B 19/247

(54) **Dispositif d'affichage d'une indication de quantième**
Vorrichtung zur Anzeige einer Datumsanzeige
Display system for showing the date

(43) Date de publication de la demande: 11.02.2015
(73) Titulaire: ETA SA Manufacture Horlogère Suisse, 2540 Grenchen (CH)
(72) Inventeur: Lagorgette, Pascal, 2502 Bienne (CH)
(74) Mandataire: Surmely, Gérard

(56) Documents cités:
- EP-A1- 1 536 300
- DE-U1- 29 702 749

## Description

La présente invention concerne un dispositif d'affichage d'une indication telle que l'indication de quantième pour une pièce d'horlogerie.

De nombreuses montres, outre l'heure et les minutes, affichent le quantième du mois. Pour ce faire, il existe plusieurs solutions :
La solution la plus simple consiste à utiliser un anneau de quantième sur lequel sont notés en périphérie les numéros 1 à 31. La périphérie de l'anneau de quantième passe sous un guichet ménagé dans le cadran de la montre et fait apparaître le quantième du mois. Les indications de quantième sont régulièrement réparties angulairement sur la circonférence de l'anneau.

On comprend bien que la taille des indications de quantième dépend du diamètre de l'anneau. On comprend donc que plus la taille des indications de quantième est importante, plus le rayon de l'anneau de quantième est important, et plus cet anneau s'avère encombrant dans la boîte de la montre.

Pour faciliter la lecture du quantième, il est évident qu'une solution consiste à augmenter la taille des indications de quantième mais avec la limitation précitée.

D'autres possibilités d'améliorer la lisibilité des indications de quantième existent.

Une première possibilité consiste à intégrer une loupe au niveau du guichet du cadran à travers lequel apparaissent les indications de quantième.

Une autre solution consiste à utiliser deux anneaux de quantième superposés. L'un de ces anneaux porte les chiffres 1 à 15 et l'autre anneau porte les chiffres 16 à 31. Une fenêtre ménagée dans celui des anneaux qui se déplace au-dessus de l'autre permet de visualiser les chiffres de l'anneau inférieur. En répartissant les indications de quantième sur deux anneaux, ces indications peuvent être plus grandes.

Un autre principe consiste à utiliser deux disques. L'un des disques porte les chiffres 0, 1, 2 ,3 des dizaines tandis que l'autre disque porte les chiffres 0 à 9, à savoir les unités. Les deux disques sont disposés côte-à-côte, de façon à reconstituer les quantièmes du mois.

On comprend que l'emploi de deux anneaux ou disques de quantième complique le mécanisme, ce qui réserve plutôt ce genre de solutions à des montres haut de gamme. En outre, de telles solutions ont souvent pour effet de ralentir le changement de date. Dans le cas du mécanisme à deux disques juxtaposés brièvement décrit ci-dessus, pour passer du 1^{er} jour du mois au 21^{ème} jour du mois par exemple, il faut que le disque des unités effectue deux tours complets pour qu'il entraîne l'autre disque de 0 à 2.

Le document EP 1536300 A1 divulgue un mécanisme de quantième pour pièce d'horlogerie comprenant deux anneaux de quantième superposés, respectivement inférieur et supérieur. L'anneau supérieur comprend seize secteurs, dont quinze portent quinze marquages successifs d'un cycle de 31 positions, et dont le seizième est un secteur excédentaire portant une fenêtre transparente. L'anneau inférieur comprend dix-sept secteurs, dont seize portent les seize autres marquages du cycle de 31 positions, et dont le dix-septième est un secteur excédentaire. Une dent amincie est prévue entre deux dents successives de la denture de chacun des anneaux inférieur et supérieur. Lorsqu'un anneau présente son secteur excédentaire à l'endroit de la zone d'affichage, la dent amincie se trouve vis-à-vis des moyens d'entraînement, de sorte que les moyens d'entraînement entraînent uniquement l'autre anneau.

Le document DE 29702749 U1 divulgue un dispositif d'affichage de la date ou de l'heure pour une montre, avec des indications des unités et des dizaines sous la forme de chiffres non divisés à deux digits. Les indications des unités et des dizaines sont visibles à travers une fenêtre ménagée dans le cadran. Le dispositif d'affichage comprend deux anneaux concentriques superposés de mêmes dimensions qui portent chacun la moitié des indications. L'anneau inférieur comprend un champ vide, et l'anneau supérieur comprend une fenêtre. Le dispositif d'affichage comprend des moyens d'arrêtage et d'entraînement pour une commande forcée mutuelle à la fin de la rotation de l'un des anneaux, de façon que le second anneau effetue son pivotement tandis que le premier anneau reste immobile.

La présente invention se propose d'apporter une nouvelle solution offrant plus de compacité et permettant d'afficher une indication du quantième de plus grande taille.

A cet effet, la présente invention se rapporte à un dispositif d'affichage d'une indication de quantième pour une pièce d'horlogerie, ce dispositif d'affichage comprenant un support présentant une pluralité de zones d'affichage sur lesquelles sont reportées les indications de quantième d'un mois, le support se déplaçant derrière un guichet ménagé dans un cadran de la pièce d'horlogerie pour laisser apparaître l'une des indications de quantième reportées sur le support, ce dispositif d'affichage étant caractérisé en ce que :
a) les indications de quantième d'un mois sont réparties entre un premier et un second groupes, les indications de quantième du premier groupe étant d'une première couleur, et les indications de quantième du second groupe étant d'une seconde couleur différente de celle des indications de quantième du premier groupe ;
b) le nombre de zones d'affichage est égal à seize, le nombre d'indications de quantième dudit premier groupe est égal à quinze, le nombre d'indications de quantième du second groupe est égal à seize, chaque indication dudit premier groupe étant superposée à une indication du second groupe dans une zone d'affichage correspondante du support ;
c) il comporte également un premier filtre optique dont la transmittance est choisie pour transmettre la première couleur et arrêter la seconde couleur, et un second filtre optique dont la transmittance est choisie pour transmettre la seconde couleur et arrêter la première couleur, et des moyens agencés pour positionner les premier et second filtres optiques alternativement derrière le guichet.

Grâce à ces caractéristiques, la présente invention procure un dispositif d'affichage d'une indication de quantième pour pièce d'horlogerie dans laquelle 15 indications de quantième d'un mois sont reportées sur le support selon une première couleur, et les 16 indications de quantième restantes sont reportées sur le support selon une seconde couleur, une indication de quantième de la première couleur étant superposée à une indication de quantième de la seconde couleur sur chaque zone d'affichage du support, à l'exception d'une zone dans laquelle il n'y aura qu'une seule indication.

On comprend donc que, lorsque le premier filtre optique qui laisse passer la première couleur et bloque la seconde couleur est placé au-dessus de la zone d'affichage, l'observateur voit l'indication de quantième de la première couleur mais pas l'indication de quantième de la seconde couleur. Inversement, lorsque le second filtre optique qui laisse passer la seconde couleur et bloque la première couleur est placé au-dessus de la zone d'affichage, l'observateur voit l'indication de quantième de la seconde couleur mais pas l'indication de quantième de la première couleur. Ainsi, pour une surface donnée du support, les indications de quantième peuvent être reportées sur ce support selon des dimensions sensiblement deux fois plus grandes, ce qui améliore considérablement la lisibilité de ces indications de quantième.

D'autres caractéristiques et avantages de la présente invention ressortiront plus clairement de la description détaillée qui suit d'un mode de réalisation du dispositif d'affichage selon l'invention, cet exemple étant donné à titre purement illustratif et non limitatif seulement, en liaison avec le dessin annexé sur lequel :
- la figure 1 est une vue en coupe verticale à travers la boîte de montre montrant le support, les filtres et le cadran avec son guichet ;
- la figure 2 est une vue de dessus du guichet ménagé dans le cadran de la montre et à travers lequel apparaissent une première et une seconde indications de quantième superposées en l'absence des filtres optiques ;
- la figure 3 est une vue analogue à celle de la figure 2 sur laquelle le premier filtre optique laisse apparente l'indication de quantième appartenant au premier groupe, et masque l'indication de quantième appartenant au second groupe ;
- la figure 4 est une vue analogue à celle de la figure 2 sur laquelle le second filtre laisse apparente l'indication de quantième appartenant au second groupe, et masque l'indication de quantième appartenant au premier groupe ;
- la figure 5 est une vue de dessus d'un anneau de quantième au-dessus duquel est disposé un filtre optique en forme d'anneau, une première partie de l'anneau étant d'une première couleur pour laisser apparaître les indications de quantième appartenant au premier groupe et masquer les indications de quantième du second groupe, et une partie complémentaire de la première partie de l'anneau étant d'une seconde couleur pour laisser apparaître les indications de quantième appartenant au second groupe et masquer les indications de quantième appartenant au premier groupe ;

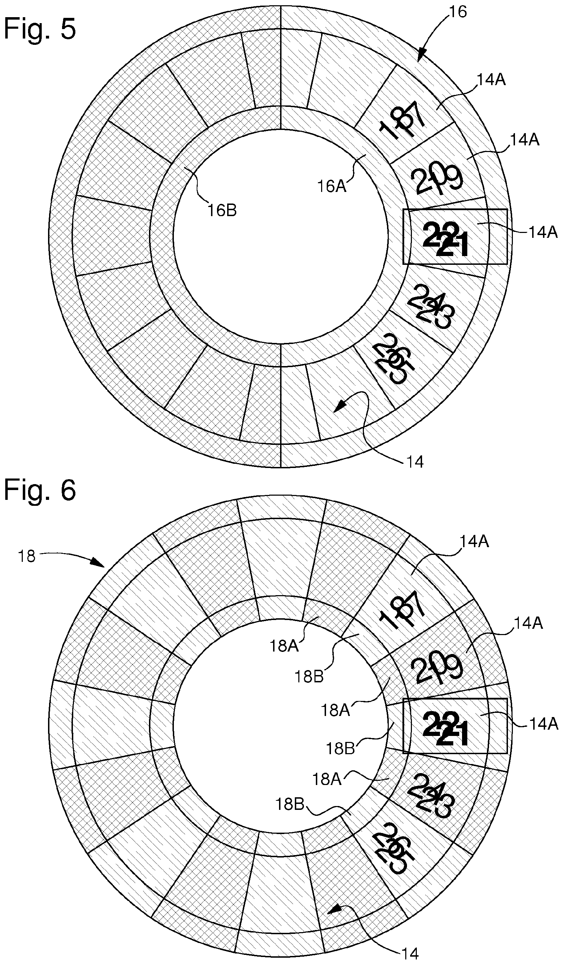

- la figure 6 est une vue de dessus d'un anneau de quantième au-dessus duquel est disposé un filtre optique en forme d'anneau, l'anneau étant partitionné en une pluralité de premières et de secondes zones qui se succèdent alternativement et qui sont respectivement d'une première et d'une seconde couleur, les premières zones de la première couleur laissant apparaître les indications de quantième du premier groupe et masquant les indications de quantième du second groupe, et les secondes zones de la seconde couleur laissant apparaître les indications de quantième du second groupe et masquant les indications de quantième du premier groupe, et
- la figure 7 est une vue de dessus d'un anneau de quantième et d'un filtre optique en forme de disque disposé au-dessus du guichet du cadran, une première partie du disque étant d'une première couleur pour laisser apparaître les indications de quantième appartenant au premier groupe et masquer les indications de quantième du second groupe, et une partie complémentaire de la première partie du disque étant d'une seconde couleur pour laisser apparaître les indications de quantième appartenant au second groupe et masquer les indications de quantième appartenant au premier groupe.

La présente invention procède de l'idée générale inventive qui consiste à reporter sur un support selon deux couleurs distinctes un premier et un second groupe d'indications de quantième d'un mois. Une indication de quantième du premier groupe qui est d'une première couleur, par exemple rouge, et une indication de quantième du second groupe qui est d'une seconde couleur, par exemple bleue, sont imprimées sur le support l'une par-dessus l'autre. Lorsqu'on place un filtre de couleur bleue par-dessus les deux indications de quantième superposées, l'indication de quantième de couleur rouge est visible, tandis que l'indication de couleur bleue est masquée. Inversement, lorsqu'on dispose un filtre de couleur rouge par-dessus les deux indications de quantième superposées, l'indication de quantième de couleur rouge est masquée et l'indication de couleur bleue est visible. Il est donc possible, sur une même zone d'affichage du support, de reporter deux indications de quantième distinctes. Pour une surface donnée du support, on dispose donc du double de superficie pour reporter les indications de quantième, ce qui permet d'imprimer les indications de quantième selon de plus grandes dimensions et donc d'améliorer la lisibilité des indications de quantième.

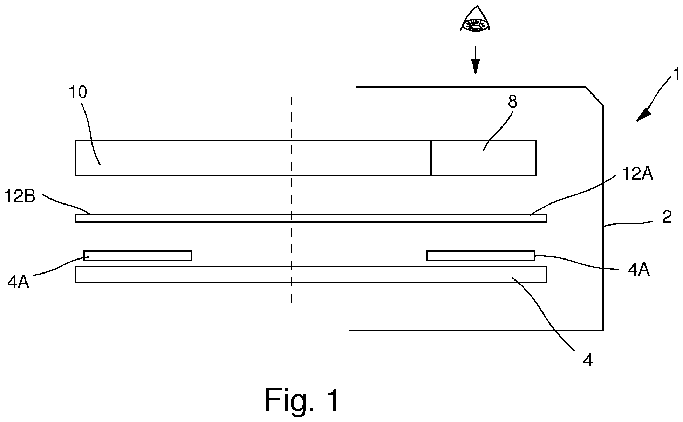

Un dispositif d'affichage des indications de quantième d'un mois selon l'invention est représenté en coupe à la figure 1. Désigné dans son ensemble par la référence numérique générale 1, ce dispositif d'affichage, logé dans une boîte de montre 2, comprend un support 4 sur lequel sont imprimées des indications de quantième.

Plus précisément, le support 4, par exemple en forme de disque, présente sur sa périphérie des zones 4A d'impression des indications de quantième 6A, 6B d'un mois. Selon une caractéristique de l'invention, les indications de quantième d'un mois sont réparties entre un premier et un second groupes, les indications de quantième 6A du premier groupe étant d'une première couleur, et les indications de quantième 6B du second groupe étant d'une seconde couleur, différente de celle des indications de quantième 6A du premier groupe. Le nombre de zones d'impression 4A sur le support 4 est limité au nombre d'indications de quantième d'un groupe et sur chaque zone d'impression 4A se superposent une indication de quantième 6A du premier groupe et une indication de quantième 6B de l'autre groupe.

Le support 4 est animé d'un mouvement de type pas-à-pas de façon à se déplacer d'un pas une fois toutes les 24 heures pour faire apparaître dans un guichet 8 ménagé dans un cadran de montre 10 l'indication de quantième du jour courant.

Ce dispositif d'affichage 1 est destiné à une montre et est dit affichage « Grande Date » car il permet d'utiliser de grands chiffres.

Un premier filtre optique 12A dont la transmittance est choisie pour transmettre la première couleur des indications de quantième 6A du premier groupe et arrêter la seconde couleur des indications de quantième 6B du second groupe, et un second filtre optique 12B dont la transmittance est choisie pour transmettre la seconde couleur des indications de quantième 6B du second groupe et arrêter la première couleur des indications de quantième 6A du premier groupe sont alternativement positionnés derrière le guichet 8.

Ainsi, le support 4, par exemple en forme de disque ou d'anneau, présente sur sa périphérie seize zones d'impression 4A réparties sur 360°. Sur l'une de ces zones d'impression 4A sont par exemple inscrites l'indication de quantième « 21 » du premier groupe dans une première couleur (par exemple rouge), et l'indication de quantième « 22 » du second groupe dans une seconde couleur (par exemple bleue). Si le premier filtre optique 12A positionné derrière le guichet 8 est de couleur rouge, l'indication de quantième « 21 » du premier groupe ne sera pas visible mais l'indication de quantième « 22 » sera visible. Inversement, si l'on positionne derrière le guichet 8 le second filtre optique 12B de couleur bleue, l'indication de quantième « 21 » du premier groupe sera visible mais l'indication de quantième « 22 » ne sera pas visible.

Selon la répartition des indications de quantième entre les premier et second groupes, le déplacement des filtres 12A, 12B se fera un jour sur deux si les groupes sont pour l'un composé des chiffres impairs (01, 03, 05,..., 15,... 31) et pour l'autre des chiffres pairs (02, 04,..., 16,... 30). Par contre, si les groupes sont pour l'un composé des chiffres de 01 à 15, et pour l'autre des chiffres de 16 à 31, le déplacement des filtres 12A, 12B se fera entre le 15^{ème} et le 16^{ème} jour du mois, et entre le dernier jour du mois et le premier jour du mois suivant.

L'homme du métier est à même de concevoir la cinématique du support 4 et des filtres 12A, 12B en fonction du choix de la composition des groupes de quantièmes 6A, 6B, de la forme géométrique du support 4 et de celle des filtres 12A, 12B. La cinématique du dispositif d'affichage est agencée de façon que le support 4 des indications de quantième 6A, 6B se déplace soit tous les jours et les filtres toutes les quinzaines, soit de façon que le support 4 se déplace tous les deux jours et les filtres 12A, 12B tous les jours.

Le moyen de filtrage peut se présenter sous la forme d'un disque ou d'un anneau fractionné en deux portions de 180° chacune d'une première et d'une seconde couleurs respectivement.

A titre d'exemple, la figure 5 est une vue de dessus d'un anneau de quantième 14 qui présente sur sa périphérie seize zones d'impression 14A réparties sur 360°. Au-dessus de l'anneau de quantième 14 est disposé un filtre optique 16 en forme d'anneau. Une première partie 16A de l'anneau 16 est d'une première couleur pour laisser apparaître les indications de quantième appartenant au premier groupe et masquer les indications de quantième du second groupe, et une partie 16B complémentaire de la première partie 16A de l'anneau 16 est d'une seconde couleur pour laisser apparaître les indications de quantième appartenant au second groupe et masquer les indications de quantième appartenant au premier groupe.

La figure 6 est une vue de dessus d'un anneau de quantième 14 qui présente sur sa périphérie seize zones d'impression 14A réparties sur 360°. Au-dessus de l'anneau de quantième 14 est disposé un filtre optique 18 en forme d'anneau, l'anneau 18 étant partitionné en une pluralité de premières et de secondes zones 18A, 18B qui se succèdent alternativement et qui sont respectivement d'une première et d'une seconde couleur, les premières zones 18A de la première couleur laissant apparaître les indications de quantième du premier groupe et masquant les indications de quantième du second groupe, et les secondes zones 18B de la seconde couleur laissant apparaître les indications de quantième du second groupe et masquant les indications de quantième du premier groupe.

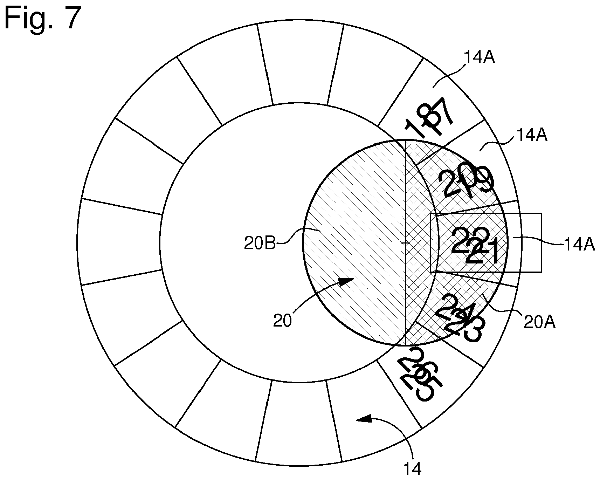

La figure 7 est une vue de dessus d'un anneau de quantième 14 qui présente sur sa périphérie seize zones d'impression 14A réparties sur 360°. Un filtre optique 20 en forme de disque disposé au-dessus du guichet du cadran présente une première partie 20A qui est d'une première couleur pour laisser apparaître les indications de quantième appartenant au premier groupe et masquer les indications de quantième du second groupe, et une partie 20B complémentaire de la première partie 20A du disque 20 est d'une seconde couleur pour laisser apparaître les indications de quantième appartenant au second groupe et masquer les indications de quantième appartenant au premier groupe.

La figure 1 montre en coupe verticale un support 4 avec les zones d'impressions 4A, les filtres 12A, 12B et un cadran 10 avec son guichet 8.

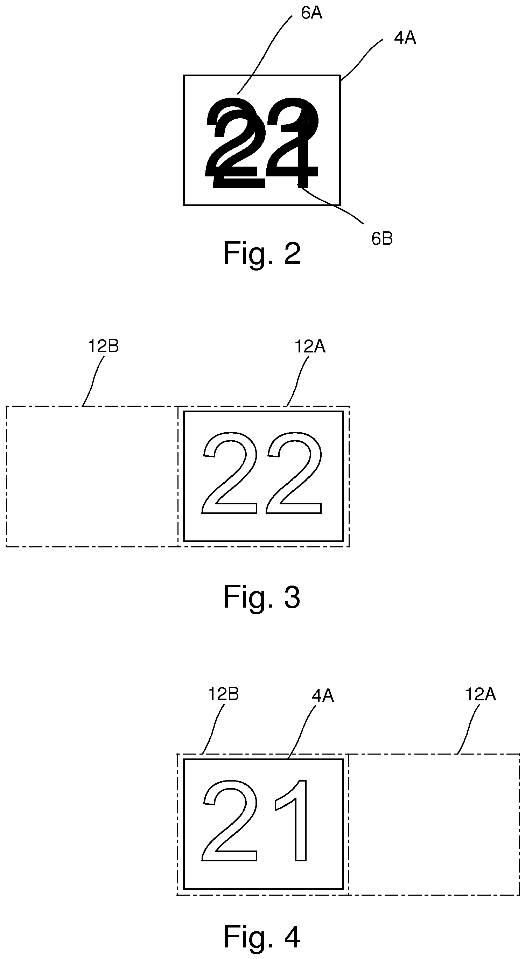

En figure 2, on a représenté les indications de quantième « 21 » et « 22 » vues au travers du guichet 8 d'un cadran de montre 10 sans les filtres 12A, 12B.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées. On comprendra en particulier que les choix de la couleur et du filtre dépendent du résultat souhaité. On prendra garde de choisir des couleurs suffisamment éloignées et/ou des filtres plus ou moins sélectifs. On peut utiliser des filtres par absorption qui sont moins performants que des filtres par réflexion.

## Revendications

1. Dispositif d'affichage d'une indication de quantième pour une pièce d'horlogerie, ce dispositif d'affichage (1) comprenant un support (4) présentant une pluralité de zones d'affichage (4A) sur lesquelles sont reportées les indications de quantième (6A, 6B) d'un mois, le support (4) se déplaçant derrière un guichet (8) ménagé dans un cadran (10) de la pièce d'horlogerie pour laisser apparaître l'une des indications de quantième reportées sur le support (4), ce dispositif d'affichage étant **caractérisé en ce que** :
a) les indications de quantième (6A, 6B) d'un mois sont réparties entre un premier et un second groupes, les indications de quantième (6A) du premier groupe étant d'une première couleur, et les indications de quantième (6B) du second groupe étant d'une seconde couleur différente de celle des indications de quantième (6A) du premier groupe ;
b) le nombre de zones d'affichage (4A) est égal à seize, le nombre d'indications de quantième (6A) dudit premier groupe est égal à quinze, le nombre d'indications de quantième (6B) du second groupe est égal à seize, chaque indication (6A) dudit premier groupe étant superposée à une indication (6B) du second groupe dans une zone d'affichage (4A) correspondante du support (4) ;
c) il comporte également un premier filtre optique (12A) dont la transmittance est choisie pour transmettre la première couleur et arrêter la seconde couleur, et un second filtre optique (12B) dont la transmittance est choisie pour transmettre la seconde couleur et arrêter la première couleur, et des moyens agencés pour positionner les premier et second filtres optiques (12A, 12B) alternativement derrière le guichet (8).

2. Dispositif d'affichage selon la revendication 1, **caractérisé en ce que** le second groupe est composé des chiffres impairs (01, 03, 05,..., 15,...31) et le premier groupe est composé des chiffres pairs (02, 04,..., 16,...30).

3. Dispositif d'affichage selon la revendication 1, **caractérisé en ce que** le premier groupe est composé des chiffres de 01 à 15 et le second groupe est composé des chiffres de 16 à 31.

4. Dispositif d'affichage selon l'une quelconque des revendications 2 ou 3, **caractérisé en ce que** la cinématique du dispositif d'affichage (1) d'une indication de quantième est configurée pour déplacer le support (4) des indications de quantième tous les jours et les premier et second filtres optiques (12A, 12B) toutes les quinzaines, ou bien pour déplacer le support (4) des indications de quantième tous les deux jours et les premier et second filtres optiques (12A, 12B) tous les jours.

5. Dispositif d'affichage selon l'une quelconque des revendications 1 à 4, **caractérisé en ce que** le support (4) est un anneau ou un disque.

6. Dispositif d'affichage selon l'une quelconque des revendications 1 à 5, **caractérisé en ce que** les premier et second filtres optiques (16A, 16B ; 20A, 20B) se présentent sous la forme d'un disque ou d'un anneau fractionné en deux.

7. Dispositif d'affichage selon l'une quelconque des revendications 1 à 5, **caractérisé en ce que** les premier et second filtres optiques (18A, 18B) se présentent sous la forme d'un anneau fractionné en une pluralité de premières et de secondes zones qui se succèdent alternativement et qui sont respectivement d'une première et d'une seconde couleur, les premières zones (18A) de la première couleur laissant apparaître les indications de quantième du premier groupe et masquant les indications de quantième du second groupe, et les secondes zones (18B) de la seconde couleur laissant apparaître les indications de quantième du second groupe et masquant les indications de quantième du premier groupe.

8. Dispositif d'affichage selon l'une quelconque des revendications 1 à 7, **caractérisé en ce que** les premier et second filtres optiques sont à absorption ou à réflexion.

## Patentansprüche

1. Anzeigevorrichtung einer Datumsangabe für einen Teil für die Uhrmacherei, wobei diese Anzeigevorrichtung (1) einen Support (4) umfasst, der über eine Vielzahl von Anzeigezonen (4A) verfügt, auf denen die Datumsangaben (6A, 6B) eines Monats übertragen sind, wobei sich der Support (4) hinter ein Fensterchen (8) bewegt, das in einem Zifferblatt (10) des Teils für die Uhrmacherei ausgebildet ist, um eine der auf dem Support (4) übertragenen Datumsangaben sichtbar zu machen, wobei diese Anzeigevorrichtung **dadurch gekennzeichnet ist, dass**:
a) Die Datumsangaben (6A, 6B) eines Monats auf eine erste und eine zweite Gruppe verteilt sind, wobei die Datumsangaben (6A) der ersten Gruppe eine erste Farbe und die Datumsangaben (6B) der zweiten Gruppe eine zweite Farbe haben, die sich von der der Datumsangaben (6A) der ersten Gruppe unterscheidet;
b) Die Anzahl der Anzeigezonen (4A) gleich sechzehn ist, die Anzahl der Datumsangaben (6A) der ersten Gruppe gleich fünfzehn ist und die Anzahl der Datumsangaben (6B) der zweiten Gruppe gleich sechzehn ist, wobei jede Angabe (6A) der ersten Gruppe eine Angabe (6B) der zweiten Gruppe in einer entsprechenden Anzeigezone (4A) des Supports (4) überlagert;
c) Sie auch einen ersten optischen Filter (12A) aufweist, dessen Transmission so gewählt ist, dass sie die erste Farbe transmittiert und die zweite Farbe anhält, und einen zweiten optischen Filter (12B), dessen Transmission so gewählt ist, dass sie die zweite Farbe transmittiert und die erste Farbe anhält, und Mittel, die eingerichtet sind, um den ersten und zweiten optischen Filter (12A, 12B) abwechselnd hinter dem Fensterchen (8) zu positionieren.

2. Anzeigevorrichtung nach Anspruch 1, **dadurch gekennzeichnet, dass** die zweite Gruppe aus ungeraden Ziffern (01, 03, 05,..., 15,... 31) und die erste Gruppe aus geraden Ziffern (02, 04,..., 16,... 30) besteht.

3. Anzeigevorrichtung nach Anspruch 1, **dadurch gekennzeichnet, dass** die erste Gruppe aus den Ziffern 01 bis 15 und die zweite Gruppe aus den Ziffern 16 bis 31 besteht.

4. Anzeigevorrichtung nach einem der Ansprüche 2 oder 3, **dadurch gekennzeichnet, dass** die Kinematik der Anzeigevorrichtung (1) einer Datumsangabe konfiguriert ist, um den Support (4) der Datumsangaben jeden Tag und den ersten und zweiten optischen Filter (12A, 12B) alle fünfzehn Tag zu bewegen, oder aber um den Support (4) der Datumsangaben alle zwei Tage und den ersten und zweiten optischen Filter (12A, 12B) jeden Tag zu bewegen.

5. Anzeigevorrichtung nach einem der Ansprüche 1 bis 4, **dadurch gekennzeichnet, dass** der Support (4) ein Ring oder eine Scheibe ist.

6. Anzeigevorrichtung nach einem der Ansprüche 1 bis 5, **dadurch gekennzeichnet, dass** der erste und der zweite optische Filter (16A, 16B; 20A, 20B) die Form einer Scheibe oder eines Rings, die in zwei Teile geteilt ist, haben.

7. Anzeigevorrichtung nach einem der Ansprüche 1 bis 5, **dadurch gekennzeichnet, dass** der erste und der zweite optische Filter (18A, 18B) die Form eines Rings haben, der in eine Vielzahl von ersten und zweiten Zonen unterteilt ist, die abwechselnd aufeinanderfolgen, und jeweils eine erste und eine zweiten Farbe haben, wobei die ersten Zonen (18A) der ersten Farbe die Datumsangaben der ersten Gruppe sichtbar machen und die Datumsangaben der zweiten Gruppe verbergen, und die zweiten Zonen (18B) der zweiten Farbe die Datumsangaben der zweiten Gruppe sichtbar machen und die Datumsangaben der ersten Gruppe verbergen.

8. Anzeigevorrichtung nach einem der Ansprüche 1 bis 7, **dadurch gekennzeichnet, dass** der erste und zweite optischen Filter Absorptionsfilter oder Reflexionsfilter sind.

## Claims

1. Date indication display device for a timepiece, said display device (1) including a support element (4) having a plurality of display areas (4A) on which are arranged the indications of the days of the month (6A, 6B), the support element (4) moving behind an aperture (8) arranged in a dial (10) of the timepiece to reveal one of the date indications arranged on the support element (4), said display device being **characterized in that**:
a) the indications (6A, 6B) of the days of the month are divided into a first and a second group, the date indications (6A) of the first group having a first colour, and the date indications (6B) of the second group having a second colour, different from that of the date indications (6A) of the first group;
b) the number of display areas (4A) is equal to sixteen, the number of date indications (6A) of said first group is equal to fifteen, the number of date indications (6B) of the second group is equal to sixteen, each date indication (6A) of said first group being superposed on a date indication (6B) of the second group on a corresponding display area (4A) of the support element (4);
c) it also comprises a first optical filter (12A) whose transmittance is chosen to transmit the first colour and to block the second colour, and a second optical filter (12B) whose transmittance is chosen to transmit the second colour and to block the first colour, and means arranged to alternately position the first and second optical filters (12A, 12B) behind the aperture (8).

2. Display device according to claim 1, **characterized in that** the second group comprises the odd numbers (01, 03, 05, ..., 15, ... 31) and the first group the even numbers (02, 04, ..., 16, ...30).

3. Display device according to claim 1, **characterized in that** the first group comprises the numbers from 01 to 15, and the second group the numbers from 16 to 31.

4. Display device according to any of claims 2 or 3, **characterized in that** the kinematics of the date indication display device (1) are configured to move the date indication support element (4) every day and the first and second optical filters (12A, 12B) every fifteen days, or to move the date indication support element (4) every other day and the first and second optical filters (12A, 12B) every day.

5. Display device according to any of claims 1 to 4, **characterized in that** the support element (4) is a ring or a disc.

6. Display device according to any of claims 1 to 5, **characterized in that** the first and second optical filter (16A, 16B; 20A, 20B) take the form of a disc or a ring divided into two.

7. Display device according to any of claims 1 to 5, **characterized in that** the first and second optical filters (18A, 18B) take the form of a ring divided into a plurality of first and second areas which follow each other alternately and which are respectively in a first and a second colour, the first areas (18A) in the first colour revealing the date indications of the first group and concealing the date indications of the second group, and second areas (18B) in the second colour revealing the date indications of the second group and concealing the date indications of the first group.

8. Display device according to any of claims 1 to 7, **characterized in that** the first and second optical filters are absorption or reflection filters.
